# EUROPÄISCHE PATENTSCHRIFT

(11) **EP 1 488 566 B1**
(45) Veröffentlichungstag und Bekanntmachung des Hinweises auf die Patenterteilung: **27.12.2006**
(21) Anmeldenummer: 03724831.7
(22) Anmeldetag: 11.03.2003
(51) Int. Cl.: H04L 9/00, H04K 1/00, H04K 3/00

(54) **SCHALTUNGSANORDNUNG ZUM SICHEREN INFORMATIONSAUSTAUSCH ZWISCHEN EINEM SENDER UND EINEM EMPFANGER**
CIRCUIT ARRANGEMENT FOR SECURING INFORMATION EXCHANGE BETWEEN A TRANSMITTER AND A RECEIVER
CIRCUIT PERMETTANT DE SECURISER L'ECHANGE D'INFORMATIONS ENTRE UN EMETTEUR ET UN RECEPTEUR

(30) Priorität: 28.03.2002 DE 10214118
(43) Veröffentlichungstag der Anmeldung: 22.12.2004
(73) Patentinhaber: Infineon Technologies AG, 81669 München (DE)
(72) Erfinder: DIRSCHERL, Gerd, 81543 München (DE); JANSSEN, Norbert, 81667 München (DE)
(74) Vertreter: Epping - Hermann - Fischer
(86) Internationale Anmeldenummer: PCT/DE2003/000774
(87) Internationale Veröffentlichungsnummer: WO 2003/084120

(56) Entgegenhaltungen:
- EP-A- 1 039 669
- US-A- 2 101 224
- US-A- 5 280 497

## Beschreibung

Die Erfindung betrifft eine Schaltungsanordnung mit einem Sender und einem Empfänger.

Bei derartigen Schaltungsanordnungen ist der Sender und der Empfänger über wenigstens eine Signalleitung miteinander verbunden, über die eine Nutzinformation austauschbar ist. Während der Übertragung der Nutzinformation entsteht ein für die jeweiligen Daten typisches Strom- sowie Abstrahlungsprofil. Gelingt es, dieses Strom- bzw. Abstrahlungsprofil auszuwerten, wie beispielweise mit einer in der EP 0 981 115 A2 beschriebenen Anordnung, so ist es möglich, Rückschlüsse auf die übertragenen Daten bzw. den funktionellen Aufbau der Schaltungsanordnung zu ziehen. Beim Entwurf der Schaltungsanordnungen wird deshalb großer Wert darauf gelegt, datenabhängige Schaltungsvorgänge in dem elektronischen Schaltkreis, der unter anderem den Sender und den Empfänger umfaßt, zu vermeiden.

Es sind unter anderem zwei unterschiedliche Verfahren bekannt, mit denen die Analyse von Stromprofilen möglich ist.

Die differentielle Stromprofilanalyse (differencial power analysis, dpa) ist eine der wichtigsten Methoden zum Angriff auf Schaltungsanordnungen im Hinblick auf vertrauliche Informationen wie Paßwörter oder kryptographische Schlüssel. Dabei werden bei einem vorgegebenen Programm bzw. einem vorgegebenem Algorithmus mit statistischen Methoden gemessene Stromprofile bzw. deren über einen oder mehrere Taktzyklen berechnete Ladungsintegrale der Schaltungsanordnung ausgewertet. Bei einer ausreichend großen Anzahl von Programmausführungen kann aus der Korrelation einer systematischen Datenvariation und dem jeweiligen Ladungsintegral Rückschluß auf die zu schützende Information gezogen werden.

Um ein Ausspionieren der Daten zu erschweren, werden Schaltungsanordnungen deshalb in der sogenannten "Dual-Rail"-Technologie ausgeführt. Im Gegensatz zu herkömmlichen Schaltungsaufbauten in der sogenannten "Single-Rail-Logik", bei der jedes Bit innerhalb eines Daten- und Signalpfades physikalisch durch genau einen elektrischen Knoten dargestellt wird, wird bei der Realisierung mit "Dual-Rail-Logik" jedes Bit durch zwei Knoten k und kq dargestellt. Das Bit weist dann einen gültigen logischen Wert auf, wenn k dem wahren logischen Wert b dieses Bits entspricht und kq dem negierten Wert bn = not (b).

Die erwünschte Invarianz der Ladungsintegrale wird dadurch erreicht, daß zwischen je zwei Zustände mit gültigen logischen Werten (b, bn) = (1,0) oder (0,1) ein sogenannter Vorlade-Zustand (precharge) eingefügt ist, für den sowohl der Knoten k als auch der Knoten kq auf das selbe elektrische Potential geladen werden. Die Knoten bzw. Signalleitungen nehmen folglich logisch ungültige Werte (1,1) oder (0,0) an.

Für jede beliebige solcher Zustandsfolgen gilt, daß bei jedem Übergang von einem Vorlade-Zustand auf einen logisch gültigen Wert genau ein Knoten von "1" nach "0" umgeladen wird und bei jedem Übergang von einem logisch günstigen Wert zu einem Vorlade-Zustand genau ein Knoten von "0" nach "1" umgeladen wird. Dies ist unabhängig von dem logisch gültigen Wert b eines jeweiligen Zustandsbits.

Hieraus folgt, daß die diesen Zustandsfolgen entsprechenden Ladungsintegrale unabhängig sind von der Abfolge der logisch gültigen Werte (b, bn), sofern Sorge dafür getragen wird, daß die Knoten k und kq gleiche elektrische Kapazitäten aufweisen. Das Stromprofil eines derart realisierten Datenpfades hängt somit nicht von der zeitlichen Variation der zu verarbeitenden Daten ab. Mittels der differentiellen Stromprofilanalyse ist ein Ausspionieren von Daten in einer Schaltungsanordnung mit Dual-Rail-Logik nicht möglich.

Nachteil der Dual-Rail-Logik ist jedoch ein erhöhter Flächenbedarf, ein hoher Strom sowie eine geringere Performance durch die zwischen zwei Zustandsfolgen notwendige Vorlade-Phase. Andererseits kann aber aus dem Abstrahlungsprofil durch Umladen der Signalleitungen ein Rückschluß auf die übertragenen Daten gezogen werden.

Ein anderes Verfahren zur Verhinderung von Stromprofilanalysen ist die sogenannte "switched capacitor-Methode". Bei diesem Verfahren ist jede Signalleitung mit einem Ladungsspeicher verbunden, der über eine die Nutzinformation auswertende Schaltungsanordnung fallweise mit der Signalleitung verbunden wird. Hierdurch ist es zwar möglich, das Stromprofil zu vergleichmäßigen, eine Analyse der Nutzinformation und eventuell ein Rückschluß auf die Arbeitsweise der Schaltungsanordnung mittels einer Abstrahlungsanalyse ist jedoch nach wie vor noch möglich.

Aus der US 5,280,497 ist eine Anordnung bekannt, verschiedene Datenströme abschnittsweise aufzuteilen und eine Zuordnung der Datenstromabschnitte auf Kanäle über einen Zufallsgenerator zu steuern. Auch für optische Wellenlängenmultiplexsysteme ist die Aufteilung eines Datenstromes auf verschiedene Trägerfrequenzen des optischen Signals aus der EP 1 039 669 A2 bekannt. Die wechselnde Zuordnung mehrerer Datenströme zu mehreren Übertragungskanälen, allerdings in vorgegebener Reihenfolge, ist bereits aus der analogen Telefonie bekannt, wie in US 2,101,224 beschrieben.

Bei oben genannten Anordnungen soll die Abhörsicherheit durch eine über mehrere Kanäle verteilte Datenübertragung erhöht werden. Jedoch lassen sich auch mit entsprechendem Aufwand Korrelationen zwischen den Datensignalen auf den verschiedenen Kanälen herstellen und somit die Daten rekonstruieren.

Die Aufgabe der vorliegenden Erfindung besteht deshalb darin, eine Schaltungsanordnung anzugeben, bei der die zwischen einem Sender und einem Empfänger ausgetauschten Nutzinformationen weder mittels einer Stromprofilanalyse noch einer Abstrahlungsanalyse analysiert werden können.

Diese Aufgabe wird mit einer Schaltungsanordnung mit den Merkmalen des Anspruches 1 gelöst. Vorteilhafte Ausgestaltungen der erfindungsgemäßen Schaltungsanordnung ergeben sich aus den abhängigen Ansprüchen.

Erfindungsgemäß ist vorgesehen, den Sender über N Signalleitungen mit dem Empfänger zu koppeln, wobei eine Nutzinformation zwischen dem Sender und Empfänger über M zufällig auswählbare Signalleitungen austauschbar ist, wobei N größer als M ist.

Analog zur eingangs beschriebenen Dual-Rail-Logik werden N ≥ 2 Signalleitungen zur Signalführung, also Übertragung der Nutzinformation, verwendet. Welche Signalleitung die Nutzinformation trägt, wird erfindungsgemäß zufällig ausgewählt.

Der einfachste Fall N = 2 ähnelt der Dual-Rail-Logik. Während bei der Dual-Rail-Logik eine bestimmte Signalleitung das informationsenthaltene Nutzsignal überträgt und die andere Signalleitung grundsätzlich die komplementäre Nutzinformation trägt, wird bei der Erfindung diejenige Signalleitung, die die tatsächliche Nutzinformation trägt, zufällig ausgewählt. Die Schaltungsanordnung erschwert somit auch Analysen, bei denen Signalleitungen mittels "probing" abgehört werden. Die Analyse mittels Elektronenmikroskopie ist ebenfalls nur noch schwer zur Analyse der Schaltungsanordnung einsetzbar. Gegenüber der Dual-Rail-Logik weist die erfindungsgemäße Schaltungsanordnung weiterhin den Vorteil auf, daß die Performance bei gleicher Taktfrequenz ansteigt. Der Performancegewinn ergibt sich daraus, daß die Vorlade-Phase zwischen zwei Zustandsfolgen entfällt. In entsprechender Weise reduziert sich der Stromverbrauch gegenüber der Dual-Rail-Logik bei gleicher Performance.

Die erfindungsgemäße Schaltungsanordnung ist sowohl für die Übertragung einzelner Signale, für Bus-Systeme als auch für digitale Schaltungen geeignet.

Die zufällige Auswahl der M Signalleitungen erfolgt vorzugsweise mittels eines dem Sender und dem Empfänger zugeführten Auswahlsignales. Dieses zufällige Auswahlsignal wird in einer Schaltungsanordnung außerhalb des Senders und des Empfängers erzeugt und diesen zugeführt. Anhand des Auswahlsignals wird beim Sender festgelegt, über welche M Signalleitungen die Nutzinformation übertragen wird. Damit der Empfänger die übertragene Nutzinformation vollständig auswerten kann, benötigt dieser ebenfalls die Information, über welche der M Signalleitungen die Übertragung erfolgt.

Der Sender weist deshalb vorzugsweise eine erste, mit den Signalleitungen verbundene Auswahlvorrichtung auf, der das Auswahlsignal über eine Auswahlleitung zugeführt wird. In entsprechender Weise verfügt der Empfänger über eine zweite, mit den Signalleitungen verbundene Auswahlvorrichtung, der ebenfalls das Auswahlsignal über die Auswahlleitung zugeführt wird. Die erste Auswahlvorrichtung beaufschlagt in Abhängigkeit des Auswahlsignals zumindest eine der M Signalleitungen mit der Nutzinformation. Da der zweiten Auswahlvorrichtung ebenfalls das Auswahlsignal zugeführt wird, verfügt der Empfänger über die Information, über welche Signalleitung oder - leitungen die Nutzinformation übertragen wurde und kann diese entsprechend verarbeiten.

Vorzugsweise wird das Auswahlsignal in regelmäßigen Abständen an die erste und zweite Auswahlvorrichtung gesendet. Prinzipiell könnte mit jedem Taktzyklus die Übertragung der Nutzinformation über unterschiedliche M zufällig ausgewählte Signalleitungen erfolgen. Die Änderung, für welche M Signalleitungen die Daten übertragen werden, kann jedoch auch in anderen zeitlich periodischen oder unregelmäßigen Abständen erfolgen.

Vorzugsweise werden die Signalleitungen, die kein Nutzsignal führen, mit einem zufälligen Signal beaufschlagt. Besonders vorteilhaft ist es, wenn der durch die Nutzinformationen und die zufälligen Signale verursachte Stromverbrauch konstant ist. In diesem Fall würde eine Stromprofilanalyse der Schaltungsanordnung ins Leere laufen.

In einer bevorzugten Ausgestaltung der Erfindung ist die Anzahl M der zufällig auswählbaren Signalleitungen "1". Die Gesamtanzahl N der Signalleitungen ist vorzugsweise "2", wobei die kein Nutzsignal führende Signalleitung mit dem komplementären Wert des Nutzsignals beaufschlagt ist.

Prinzipiell ähnelt diese Anordnung der Dual-Rail-Technologie. Wie eingangs bereits erwähnt, unterscheidet sich das erfindungsgemäße Vorgehen von der Dual-rail-Technologie jedoch dadurch, daß die Nutzinformation nicht permanent über die gleiche Signalleitung übertragen wird. Eine Analyse der übertragenen Daten wird mit den aus dem Stand der Technik bekannten Methoden deshalb wesentlich erschwert.

Die Erfindung wird anhand des nachfolgend beschriebenen Ausführungsbeispiels näher erläutert.

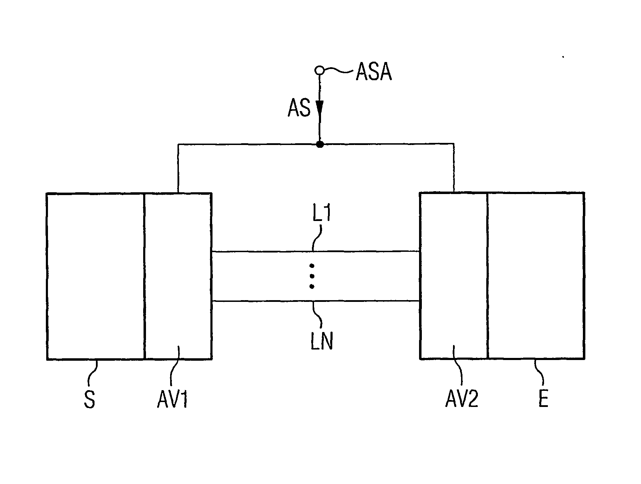

Die einzige Figur zeigt eine Schaltungsanordnung mit einem Sender S und einem Empfänger E. Beispielhaft sind der Sender S und der Empfänger E über zwei Leitungen L1, LN miteinander verbunden. Die Anzahl der Signalleitungen kann prinzipiell beliebiger Natur sein. Die Gesamtanzahl N wird letztendlich davon abhängen, wie sensibel die Informationen sind, die von dem Sender S an den Empfänger E übermittelt werden sollen.

Der Sender S kann neben seiner Funktion als Datenübertragungseinheit prinzipiell jede beliebige Funktionalität aufweisen. Insbesondere ist es denkbar, daß der Sender S über einen Speicher verfügt, in dem geheime Schlüssel oder kryptographische Daten abgelegt sind. Ebenso könnte er über Schaltungselemente verfügen, die Rechenoperationen ausführen, um das Ergebnis zu dem Empfänger E zu übertragen. Die von dem Sender S zu übertragenden Informationen könnten jedoch auch von einem außerhalb des Senders S gelegenen Schaltungsblock an diesen übertragen werden. Die Datenübertragung kann dabei in erfindungsgemäßer Weise oder lediglich über eine einzelne Leitung oder ein System erfolgen. In entsprechender Weise kann die Funktionalität des Empfängers E über die Funktion als Datenempfangs- und Auswerteeinheit hinausgehen. Diesbezüglich bestehen keinerlei Einschränkungen.

Der Sender S verfügt über eine Auswahlvorrichtung AV1, der ein Auswahlsignal AS zuführbar ist. In entsprechender Weise weist der Empfänger E eine zweite Auswahlvorrichtung AV2 auf, die ebenfalls mit dem Auswahlsignal AS beaufschlagt wird.

Das Auswahlsignal AS kann von einem Schaltungsblock außerhalb der gezeigten Schaltungsanordnung erzeugt sein und über einen Anschluß ASA den jeweiligen Auswahlvorrichtungen AV1, AV2 zugeführt werden.

Das gezeigte Ausführungsbeispiel stellt den einfachsten Fall der Erfindung dar. Die Nutzinformation wird vorzugsweise über zwei komplementäre Signale zwischen dem Sender S und dem Empfänger E übertragen. Abhängig von dem Auswahlsignal AS entscheidet die erste Auswahlvorrichtung AV1, über welche der beiden Signalleitungen L1, LN die tatsächliche Nutzinformation übertragen wird. Die zweite Auswahlvorrichtung AV2 des Empfängers E wird durch die Kenntnis des Auswahlsignals AS in die Lage versetzt, die informationsführende Signalleitung auszuwählen und die übertragene Nutzinformation dem Empfänger zuzuführen.

Die Auswahlvorrichtung kann beispielsweise aus einem Exclusiv-Oder-Gatter bestehen. Dem ersten Eingang dieses Gatters würde dann das Auswahlsignal AS zugeführt, dem zweiten Eingangsanschluß das von dem Sender S zu übertragende Signal. Abhängig davon ergibt sich eine Aussage, über welche der Signalleitungen die Nutzinformation gesendet wird. Die zweite Auswahlvorrichtung AV2 ist vorzugsweise als inverse Ausgangsfunktion ausgeführt. Die Auswahlvorrichtung könnte auch als Äquivalenz- Verknüpfung ausgeführt sein.

Je größer die Anzahl N der zwischen dem Sender S und dem Empfänger E verschalteten Signalleitungen ist, desto größer wird die Sicherheit gegenüber Analysen durch Dritte. Besonders bevorzugt ist es, wenn sich das Stromprofil - unabhängig von der übertragenen Nutzinformation - niemals ändert. Konkret bedeutet dies, daß bei einer Gesamtanzahl von N Signalleitungen X Signalleitungen mit einem ersten logischen Zustand beaufschlagt werden, während Y Signalleitungen mit einem zweiten logischen Zustand beaufschlagt werden und X + Y = N ist. Eine Stromprofilanalyse würde bei einer derartigen Anordnung keine Rückschlüsse über die übertragenen Daten sowie über den Schaltungsaufbau liefern.

Die Erfindung weist darüber hinaus den Vorteil auf, daß die Schaltungsanordnung synthetisierbar ist.

### Bezugszeichenliste

- S: Sender
- E: Empfänger
- L1, L2, ... LN: Signalleitung
- AV1, AV2: Auswahlvorrichtung
- AL: Auswahlleitung
- N: Gesamtzahl der Signalleitungen
- M: Nutzsignal führende Signalleitungen

## Patentansprüche

1. Schaltungsanordnung mit einem Sender (S) und einem Empfänger (E), wobei der Sender (S) über N Signalleitungen (L1, L2, ... LN) mit dem Empfänger (E) gekoppelt ist und N größer oder gleich 2 ist, **dadurch gekennzeichnet, dass** eine Übertragung einer Nutzinformation zwischen dem Sender (S) und dem Empfänger (E) über M zufällig ausgewählte Signalleitungen (L1, L2, ... LN) erfolgt, wobei die Änderung der Auswahl in zeitlich periodischen oder unregelmäßigen Abständen erfolgt und wobei N größer als M ist und die kein Nutzsignal führenden Signalleitungen (L1, L2, ... LN) mit einem zufälligem Signal beaufschlagt sind oder die kein Nutzsignal führenden Signalleitungen (L1, L2, ... LN) mit einem Signal derart beaufschlagt sind, sodass die Anzahl (X) der Signalleitungen (L1, L2, ... LN), die mit einem ersten logischen Zustand beaufschlagt werden, und die Anzahl (Y) der Signalleitungen (L1, L2, ... LN), die mit einem zweiten logischen Zustand beaufschlagt werden, sich nicht verändert.

2. Schaltungsanordnung nach Anspruch 1, **dadurch gekennzeichnet, dass** die zufällige Auswahl der M Signalleitungen (L1, L2, ... LN) mittels eines dem Sender (S) und dem Empfänger (E) zugeführten Auswahlsignals erfolgt.

3. Schaltungsanordnung nach Anspruch 1 oder 2, **dadurch gekennzeichnet, dass** der Sender (S) eine erste, mit den Signalleitungen (L1, L2, ... LN) verbundene Auswahlvorrichtung (AV1) aufweist, der das Auswahlsignal über eine Auswahlleitung (AL) zugeführt wird.

4. Schaltungsanordnung nach einem der vorhergehenden Ansprüche, **dadurch gekennzeichnet, dass** der Empfänger (E)) eine zweite, mit den Signalleitungen (L1, L2, ... LN) verbundene Auswahlvorrichtung (AV2) aufweist, der das Auswahlsignal über die Auswahlleitung (AL) zugeführt wird.

5. Schaltungsanordnung nach einem der vorhergehenden Ansprüche, **dadurch gekennzeichnet, dass** ein Auswahlsignal in regelmäßigen Abständen an die erste und zweite Auswahlvorrichtung (AV1, AV2) gesendet wird.

6. Schaltungsanordnung nach einem der vorhergehenden Ansprüche, **dadurch gekennzeichnet, dass** die Anzahl M der zufällig auswählbaren Signalleitungen (L1, L2, ... LN) "1" ist.

7. Schaltungsanordnung nach Anspruch 6, **dadurch gekennzeichnet, dass** die Anzahl N der Signalleitungen "2" ist und die kein Nutzsignal führende Signalleitung mit dem komplementären Wert des Nutzsignals beaufschlagt ist.

## Claims

1. Circuit arrangement having a transmitter (S) and a receiver (E), the transmitter (S) being coupled to the receiver (E) via N signal lines (L1, L2, ... LN) and N being greater than or equal to 2, **characterized in that** an item of useful information is transmitted between the transmitter and the receiver (E) via M randomly selected signal (S) lines (L1, L2, ... LN), the change to the selection being performed at temporally periodical or irregular intervals, N being greater than M, and a random signal being applied to the signal lines (L1, L2,... LN) not carrying a useful signal, or a signal being applied to the signal lines (L1, L2, ... LN) not carrying a useful signal in such a way that the number (X) of the signal lines (L1, L2, ... LN) to which a first logic state is applied and the number (Y) of the signal lines (L1, L2, ... LN) to which a second logic state is applied do not change.

2. Circuit arrangement according to Claim 1, **characterized in that** the random selection of the M signal lines (L1, L2, ... LN) is performed by means of a selection signal fed to the transmitter (S) and the receiver (E).

3. Circuit arrangement according to Claim 1 or 2, **characterized in that** the transmitter (S) has a first selection device (AV1), which is connected to the signal lines (L1, L2, ... LN) and which is fed the selection signal via a selection line (AL).

4. Circuit arrangement according to one of the preceding claims, **characterized in that** the receiver (E) has a second selection device (AV2), which is connected to the signal lines (L1, L2, ... LN) and which is fed the selection signal via the selection line (AL).

5. Circuit arrangement according to one of the preceding claims, **characterized in that** a selection signal is transmitted at regular intervals to the first and second selection device (AV1, AV2).

6. Circuit arrangement according to one of the preceding claims, **characterized in that** the number M of the randomly selectable signal lines (L1, L2, ... LN) is "1".

7. Circuit arrangement according to Claim 6, **characterized in that** the number N of the signal lines is "2", and a complementary value of the useful signal is applied to the signal line not carrying a useful signal.

## Revendications

1. Circuit comportant un émetteur (S) et un récepteur (E), l'émetteur (S) étant couplé au récepteur (E) par N lignes de signal (L1, L2, ...LN) et N étant supérieur ou égal à 2, **caractérisé en ce qu'**une transmission d'une information utile entre l'émetteur (S) et le récepteur (E) est effectuée sur M lignes de signal (L1, L2, ...LN) pouvant être sélectionnées de façon aléatoire, la modification de la sélection étant effectuée à des intervalles de temps périodiques ou irréguliers et N étant supérieur à M et les lignes de signal (L1, L2, ...LN) ne véhiculant pas de signal utile recevant un signal aléatoire ou les lignes de signal (L1, L2, ...LN) ne véhiculant pas de signal utile recevant un signal de sorte que le nombre (X) de lignes de signal (L1, L2, ...LN) qui reçoivent un premier état logique et le nombre (Y) de lignes de signal (L1, L2, ...LN) qui reçoivent un deuxième état logique ne se modifie pas.

2. Circuit selon la revendication 1, **caractérisé en ce que** la sélection aléatoire des M lignes de signal (L1, L2, ...LN) est effectuée au moyen d'un signal de sélection amené à l'émetteur (S) et au récepteur (E).

3. Circuit selon la revendication 1 ou 2, **caractérisé en ce que** l'émetteur (S) comporte un premier dispositif de sélection (AV1), qui est relié aux lignes de signal (L1, L2, ...LN) et auquel le signal de sélection est amené par une ligne de sélection (AL).

4. Circuit selon l'une des revendications précédentes, **caractérisé en ce que** le récepteur (E) comporte un deuxième dispositif de sélection (AV2), qui est relié aux lignes de signal (L1, L2, ...LN) et auquel le signal de sélection est amené par la ligne de sélection (AL).

5. Circuit selon l'une des revendications précédentes, **caractérisé en ce qu'**un signal de sélection est envoyé à intervalles réguliers aux premier et deuxième dispositifs de sélection (AV1, AV2).

6. Circuit selon l'une des revendications précédentes, **caractérisé en ce que** le nombre M de lignes de signal (L1, L2, ...LN) pouvant être sélectionnées de façon aléatoire est '1'.

7. Circuit selon la revendication 6, **caractérisé en ce que** le nombre N de lignes de signal est '2' et la ligne de signal ne véhiculant pas de signal utile reçoit la valeur complémentaire du signal utile.
